# EUROPÄISCHE PATENTSCHRIFT

(11) **EP 4 264 250 B1**
(45) Veröffentlichungstag und Bekanntmachung des Hinweises auf die Patenterteilung: **28.01.2026**
(21) Anmeldenummer: 21839157.1
(22) Anmeldetag: 15.12.2021
(51) Int. Cl.: G01N 29/036, G01N 29/34

(54) **VORRICHTUNG UND VERFAHREN ZUM BESTIMMEN VON MECHANISCHEN EIGENSCHAFTEN EINES SYSTEMS**
DEVICE AND METHOD FOR DETERMINING MECHANICAL PROPERTIES OF A SYSTEM
APPAREIL ET METHODE POUR DETERMINER DES PROPRIETES MECANIQUES D'UN SYSTEME

(30) Priorität: 15.12.2020 LU 102351
(43) Veröffentlichungstag der Anmeldung: 25.10.2023
(73) Patentinhaber: Nanosurf AG, 4410 Liestal (CH)
(72) Erfinder: FLÄSCHNER, Gotthold, 8038 Zürich (CH); FREDERIX, Patrick, 4126 Bettingen (CH); MÜLLER, Daniel, 4051 Basel (CH); MARTINEZ-MARTIN, David, Sydney, New South Wales 2050 (AU)
(74) Vertreter: Dumlich, Heiko Alexander
(86) Internationale Anmeldenummer: PCT/EP2021/085901
(87) Internationale Veröffentlichungsnummer: WO 2022/129176

(56) Entgegenhaltungen:
- US-B1- 6 330 824
- STAHL STEFAN ET AL: "Photothermal cantilever actuation for fast single-molecule force spectroscopy", REVIEW OF SCIENTIFIC INSTRUMENTS, AMERICAN INSTITUTE OF PHYSICS, 2 HUNTINGTON QUADRANGLE, MELVILLE, NY 11747, vol. 80, no. 7, 1 July 2009 (2009-07-01), pages 73702 - 73702, XP012128381, ISSN: 0034-6748, DOI: 10.1063/1.3157466
- ROBERT WALDER ET AL: "Rapid Characterization of a Mechanically Labile α-Helical Protein Enabled by Efficient Site-Specific Bioconjugation", JOURNAL OF THE AMERICAN CHEMICAL SOCIETY, vol. 139, no. 29, 26 July 2017 (2017-07-26), pages 9867 - 9875, XP055430370, ISSN: 0002-7863, DOI: 10.1021/jacs.7b02958
- RAMOS D ET AL: "Phototermal self-excitation of nanomechanical resonators in liquids", APPLIED PHYSICS LETTERS, AMERICAN INSTITUTE OF PHYSICS, 2 HUNTINGTON QUADRANGLE, MELVILLE, NY 11747, vol. 92, no. 17, 30 April 2008 (2008-04-30), pages 173108 - 173108, XP012106711, ISSN: 0003-6951, DOI: 10.1063/1.2917718
- PARK J W ET AL: "Continuous monitoring of insulin attachment kinetics on photothermally actuated microcantilever biosensor", TRANSDUCERS 2009 : 2009 INTERNATIONAL SOLID-STATE SENSORS, ACTUATORS AND MICROSYSTEMS CONFERENCE ; DENVER, COLORADO, USA, 21 - 25 JUNE 2009, IEEE, PISCATAWAY, NJ, USA, 21 June 2009 (2009-06-21), pages 979 - 982, XP031545892, ISBN: 978-1-4244-4190-7

## Beschreibung

Die Erfindung betrifft eine Vorrichtung zum Bestimmen von mechanischen Eigenschaften, insbesondere von rheologischen Eigenschaften, eines Systems, mit einem schwingbaren Kontaktelement.

Die Erfindung betrifft ferner eine Vorrichtung zum Bestimmen von mechanischen Eigenschaften, insbesondere von rheologischen Eigenschaften, eines Systems, mit einer Kontakteinrichtung zum Kontaktieren des Systems, mit einer Einrichtung zum photothermischen Anregen der Kontakteinrichtung und mit einer Einrichtung zum Detektieren von Schwingungen an der angeregten Kontakteinrichtung.

Die Erfindung betrifft auch ein Verfahren zum Bestimmen von mechanischen Eigenschaften, insbesondere von rheologischen Eigenschaften, eines Systems.

Die Erfindung betrifft außerdem eine Verwendung von zwei benachbarten Cantilevern.

Die Erfindung betrifft darüber hinaus eine Verwendung eines Systems bzw. eines biologischen Systems.

Gattungsgemäße Messvorrichtungen zum Bestimmen der Masse und/oder von mechanischen Eigenschaften etwa eines biologischen Systems sind aus dem Stand der Technik bekannt. So ist beispielsweise in der WO 2015/ 120992 A1 eine Messvorrichtung beschrieben, die mit einem Mikro-Cantilever ausgerüstet ist, welcher dazu funktionalisiert ist, an einem biologischen System anzuhaften, wie etwa eine Zelle oder eine Gruppe von Zellen. Der Mikro-Cantilever wird mit dem daran anhaftenden biologischen System hierzu mittels einer ersten Lasereinrichtung umfassend eine intensitätsmodulierte Lichtquelle zum Schwingen angeregt, während die erzeugten Schwingungen dieses Mikro-Cantilevers mittels einer zweiten Lasereinrichtung umfassend einen optischen Passfilter detektiert werden.

RAMOS D ET AL: "Phototermal self-excitation of nanomechanical resonators in liquids", APPLIED PHYSICS LETTERS, AMERICAN INSTITUTE OF PHYSICS, 2 HUNTINGTON QUADRANGLE, MELVILLE, NY 11747, Bd. 92, Nr. 17, 30. April 2008 (2008-04-30), Seiten 173108-173108, XP012106711, ISSN: 0003-6951, DOl: 10.1063/1.2917718, offenbart eine Methode zur Überwachung der Kinetik von Flüssigkeiten mithilfe eines einzelnen Mikrocantilevers, der photothermisch betätigbar ist, insbesondere zur Messung einer Massenadsorption.

Der Erfindung liegt die Aufgabe zugrunde, gattungsgemäße Messvorrichtungen und Messverfahren weiterzuentwickeln, um insbesondere die Bestimmung von mechanischen Eigenschaften eines biologischen Systems zu verbessern und besonders die Bestimmung von rheologischen Eigenschaften präziser zu ermöglichen.

Die Aufgabe der Erfindung wird von einer Vorrichtung zum Bestimmen von mechanischen Eigenschaften, insbesondere von rheologischen Eigenschaften, eines Systems, mit einem schwingbaren Kontaktelement und mit einem weiteren Kontaktelement, bei welcher die beiden Kontaktelemente derart zueinander angeordnet sind, dass sie mittels des Systems miteinander wirkverbindbar sind, mit einer Einrichtung zum photothermischen Anregen des schwingbaren Kontaktelements, und mit einer Einrichtung zum Detektieren von Schwingungen an dem angeregten schwingbaren Kontaktelement, wobei sowohl die Einrichtung zum Anregen als auch die Einrichtung zum Detektieren mit dem schwingbaren Kontaktelement wechselwirkt, wobei das schwingbare Kontaktelement bzw. das System mit unterschiedlichen Frequenzen und/oder mit einem oder mehreren Frequenzdurchläufen zum Schwingen anregbar sind.

Dadurch, dass das System gleichzeitig mit beiden Kontaktelementen in Wirkkontakt steht, von welchem zumindest eines zum Schwingen photothermisch angeregt werden kann, können mechanische Eigenschaften des Systems nicht nur besonders exakt ermittelt werden, sondern die Vorrichtung baut darüber hinaus auch noch besonders einfach. Dies trifft um so mehr zu, wenn das schwingbare Kontaktelement bzw. das System mit unterschiedlichen Frequenzen und/oder mit einem oder mehreren Frequenzdurchläufen zum Schwingen angeregt werden.

Im Gegensatz zu dem schwingbaren Kontaktelement ist das weitere Kontaktelement derart starr ausgebildet bzw. gehaltert, dass das weitere Kontaktelement nicht oder nur vernachlässigbar gering schwingbar ausgebildet ist bzw. an dem weiteren Kontaktelement eine im Sinne der Erfindung beabsichtigte Schwingungsanregung nur unzureichend initiierbar und/oder nicht detektierbar wäre.

Insofern kann das weitere Kontaktelement beispielsweise aus einem Substrat und das schwingbare Kontaktelement aus einem geeignet konstruierten Cantilever bestehen.

So kann im Sinne der Erfindung das zu messende System an einem Substrat integriert sein, an einem schwingbaren Kontaktelement bzw. Cantilever, oder dazwischen gehalten werden, auch haftfrei.

Ein entsprechendes Substrat kann beispielsweise an einem Boden einer Petrischale fixiert sein. An dieser Stelle sei sogleich noch erläutert, dass der Begriff "Rheologie" im Sinne der Erfindung die Charakterisierung der frequenzaufgelösten bzw. frequenzabhängigen, mechanischen Eigenschaften des Systems beschreibt. Mit anderen Worten bedeutet dies, dass mittels der vorliegenden Erfindung frequenzaufgelöste, viskoelastische Eigenschaften des Systems besonders exakt bestimmbar sind.

Insofern werden im Sinne der vorliegenden Erfindung frequenzabhängige Charakterisierungen hinsichtlich eines entsprechend zu untersuchenden Systems erzielt.

Die Aufgabe der Erfindung wird ebenfalls von einer Vorrichtung zum Bestimmen von mechanischen Eigenschaften, nämlich von rheologischen Eigenschaften, eines Systems, mit einer Kontakteinrichtung zum Tragen des Systems, mit einer Einrichtung zum photothermischen Anregen der Kontakteinrichtung und mit einer Einrichtung zum Detektieren von Schwingungen an der angeregten Kontakteinrichtung gelöst, wobei die Kontakteinrichtung ein erstes schwingbares Kontaktelement und ein zweites schwingbares Kontaktelement aufweist, welche derart zueinander angeordnet sind, dass das System zum Bestimmen der mechanischen Eigenschaften an beiden Kontaktelementen gleichzeitig anordenbar ist.

Durch zwei über das System mechanisch gut miteinander korrespondierende Kontaktelemente können insbesondere auch rheologische Eigenschaften des Systems äußerst einfach und präzise frequenzabhängig gemessen und bestimmt werden. Mittels gemessener rheologischer Eigenschaften können dann auch andere mechanische Eigenschaften des untersuchten Systems nochmals verifiziert bzw. präziser bestimmt werden.

Mit anderen Worten bedeutet dies, dass mittels der vorliegenden Vorrichtungen frequenzabhängige Charaktereigenschaften eines entsprechend komplexeren Systems vorgenommen werden können.

Auch bei dieser alternativen Vorrichtung kann eine präzisiere Bestimmung von Charaktereigenschaften des Systems vorgenommen werden, wenn zusätzlich das schwingbare Kontaktelement bzw. das hiermit in Kontakt befindliche System mit unterschiedlichen Frequenzen und/oder mit einem oder mehreren Frequenzdurchläufen zum Schwingen anregbar sind.

Insofern betrifft die vorliegende Erfindung einen Aufbau zum frequenzabhängigen Bestimmen von mechanischen Eigenschaften etwa von Zellen, einem biologischen System usw., wobei ein solches System beispielsweise auf einem Substrat platziert wird, und wobei sowohl eine mechanische Stimulation zum Schwingen eines Kontaktelements als auch eine diesbezügliche Erfassung der mechanischen Reaktion hierauf mittels eines flexiblen Elements, wie eben eines vorliegenden Kontaktelements, insbesondere eines Cantilevers, erfolgt.

Vorliegend hat sich gezeigt, dass eine signifikant verbesserte Stimulation durch insbesondere eine photothermische Anregung erfolgen kann, durch welche ein sehr sauberes bzw. exaktes Stimulationssignal geliefert werden kann, im Gegensatz zu einer Stimulation etwa mittels eines piezoelektrischen Elements, welches entweder auf eine Probe bzw. auf ein System oder vollständig auf einen Halter hierfür wirkt, welcher das schwingbare Kontaktelement hält.

An dieser Stelle sei nochmals deutlich erläutert, dass es besonders vorteilhaft ist, wenn hierbei nicht nur die Einrichtung zum Anregen von Schwingungen, sondern auch die Einrichtung zum Detektieren von Schwingungen berührungslos gegenüber dem jeweiligen Kontaktelement arbeitet, insbesondere mittels elektromagnetischer Lichtwellen.

Hierbei sind die beiden Kontaktelemente mittels des Systems schwingungswirkverbunden. Dadurch übt die Oszillation des ersten Kontaktelements eine mechanische Kraft auf das System aus, insbesondere auf eine lebende Zelle, wobei das System diese Oszillation beispielsweise auf das zweite Kontaktelement überträgt.

Die Charakterisierung der zwischen den beiden Kontaktelementen erfolgten Transduktion ermöglicht konstruktiv, aber auch verfahrenstechnisch eine sehr präzise Extraktion von mechanischen Eigenschaften des Systems und bevorzugt auch von rheologischen Eigenschaften des Systems.

Die vorliegende Vorrichtung weist insofern ein Koppelglied zwischen dem ersten Kontaktelement und dem zweiten Kontaktelement auf, um Schwingungen zwischen den Kontaktelementen übertragen zu können, bevorzugt von dem ersten Kontaktelement an das zweite Kontaktelement, wobei das Koppelglied das vorliegende System umfasst.

Hierbei muss das zu untersuchende System nicht zwingend an einem oder beiden Kontaktelementen haften. Es reicht eine wie auch immer geartete Wirkverbindung aus. Insofern braucht das System zwischen den Kontaktelementen lediglich kontaktbehaftet gehalten zu sein.

Hierdurch können erzeugte Schwingungen mittels mechanischer Eigenschaften des zu untersuchenden Systems beeinflusst werden.

Der Begriff "System" beschreibt im Sinne der Erfindung im Wesentlichen jegliche biologische Proben. Ein solches mögliches System kann also insbesondere ein biologisches System, oder aber auch ein nahezu beliebiges anderes System bzw. viskoelastisches System, wie ein Hydrogel, Polymer oder dergleichen, umfassen.

Insbesondere kann ein im Sinne der Erfindung vorgesehenes System vorliegend eine Zelle, eine Gruppe von Zellen, oder ein kleines Gewebe, oder dergleichen, insbesondere von Säugetieren, umfassen.

Speziell kann das vorliegende biologische System auch eine HeLa-Zelle oder Bestandteile der Zelle umfassen.

Typische Proben sind insofern biologische Proben, wie Gewebe, Zellen, polymere Proben wie Gummi, Lacke, Photoresists oder ähnliche Materialien, die viskoelastische Eigenschaften aufweisen.

Insofern betrifft die Erfindung auch speziell eine Vorrichtung sowie ein Verfahren zum Bestimmen von mechanischen Eigenschaften, insbesondere von rheologischen Eigenschaften, auch von viskoelastischen Systemen.

Jedenfalls zeichnen sich vorliegenden Systeme durch eine Vielzahl an reichhaltigen, das heißt frequenzabhängige, Phänomene aus, wie sie insbesondere Polymeren, Zellen, Schlämmen, Schäumen usw. innewohnen, wodurch sich ein solches System etwa von einer einfachen Newtonschen Flüssigkeit oder dergleichen unterscheidet.

Ist die Einrichtung zum photothermischen Anregen derart dazu eingerichtet, dass ein schwingbares Kontaktelement gleichzeitig mit verschiedenen Frequenzen anregbar ist, lassen sich frequenzabhängige Charakterisierungen eines Systems besonders einfach und exakt bestimmen.

Eine besonders präzise frequenzabhängige Charakterisierung, wir sie in dieser Erfindung stattfindet, kann erzielt werden, wenn die Anregung von schwingbaren Kontaktelementen kontaktlos bzw. speziell photothermisch erfolgt.

Im Sinne der Erfindung kann die Kontakteinrichtung unterschiedlichst ausgebildet sein, insbesondere hinsichtlich ihrer Kontaktelemente. Die Kontakteinrichtung kann hierbei eine Vielzahl solcher miteinander korrespondierender Kontaktelemente bzw. Kontaktelementepaare aufweisen. Hierbei bilden zwei Kontaktelemente gemeinsam ein Kontaktelementepaar.

Es versteht sich, dass die Kontaktelemente unterschiedlichst konstruiert sein können, sofern sie in der Lage sind, einerseits mit einem System im Sinne der Erfindung in Wirkkontakt zu treten bzw. an einem System im Sinne der Erfindung zu haften sowie andererseits zumindest teilweise entsprechend der vorliegenden Erfindung oszillieren zu können.

Insbesondere an einem bzw. einer dem zu kontaktierenden System zugewandten Ende bzw. Seite kann das jeweilige Kontaktelement bzw. ein Kontaktteil hiervon und/oder eine Kontaktfläche bzw. Anhaftfläche hiervon geometrisch unterschiedlichst ausgebildet sein. Nur zum Beispiel sei hier erwähnt, dass neben einem etwa flach bzw. plan ausgestalteten Kontaktteil bzw. einer entsprechenden Kontakt- und/oder Anhaftfläche auch anders gestaltete Formen verwendet werden können, wie beispielsweise eine pyramidenartige Spitzenform, eine Kegelstumpfform mit einem planen oder konkav gewölbten Ende oder dergleichen, eine Keilform, eine Kugelform, eine Zylinderform oder dergleichen. Auch Kombinationen aus unterschiedlichen Formen können an einem Kontaktelement realisiert sein, um zusätzliche Synergien, Effekte bzw. Vorteile erzielen zu können. Es versteht sich, dass die Wahl der möglichen Formen und Gestalten bezüglich des Kontaktelements über die vorstehend beispielhaft erwähnten Variationen hinaus gehen kann.

Eine einfach gestaltete Ausführungsvariante kann vorsehen, dass ein Kontaktelement ein Substrat mit einem System bzw. einem biologischen System umfasst.

Bevorzugt handelt es sich vorliegend um eine Cantilever basierte Vorrichtung bzw. auch um ein Cantilever basiertes Verfahren, wie später noch beschrieben ist.

Eine spezielle Ausführungsvariante sieht vor, dass das erste Kontaktelement und/oder das zweite Kontaktelement jeweils einen Cantilever, insbesondere Mikrocantilever, umfassen.

Ein derartiger Cantilever ist vorzugsweise als ein einseitig an einer Einspannbasis eingespannter "Kragarm" ausgebildet, wobei der Cantilever etwa einen rechteckig oder auch einen dreieckig geformten Grundkörper aufweisen kann.

Beispielsweise könnte einer der Kontaktelemente auch durch eine andere Konstruktion verwirklicht sein. Insbesondere das zweite Kontaktelement könnte durch ein schwingungsgelagertes Bodenplattenelement realisiert sein. Bevorzugt sind beide Kontaktelemente als Cantilever ausgelegt.

Die Kontaktelemente bzw. die Cantilever und insbesondere eine Kontakt- bzw. Anhaftflächen hiervon sind vorliegend bevorzugt durch physikalisches und/oder chemisches Modifizieren dazu funktionalisiert, an das System bzw. biologische System anhaften zu können.

Vorzugsweise besitzen die Kontaktelemente eine Länge von 10 µm bis 1000 µm und bevorzugt eine Länge von 10 µm bis 100 µm, wodurch das System betriebssicher mit der Kontakteinrichtung wechselwirken bzw. auch an der Kontakteinrichtung anhaften kann.

Ferner weisen schwingbaren Kontaktelemente vorliegende eine Resonanzfrequenz von 1 Hz bis 10 MHz und vorzugsweise von 20 kHz bis 1200 kHz auf, beim Eintauchen in ein Fluid von 1 kHz bis 400 kHz, so dass problemlos verschiedenste Systeme mit der vorliegenden Vorrichtung untersucht werden können.

Darüber hinaus weisen schwingbare Kontaktelemente im Sinne der Erfindung eine Schwingungsamplitude von 0,01 nm bis 300 nm und bevorzugt kleiner als 30 nm auf, um hierdurch insbesondere rheologische Eigenschaften des Systems gut untersuchen zu können.

Die Kontaktelemente weisen bevorzugt jeweils eine Oberstrebe und eine Unterstrebe auf, welche spitz zulaufen können, wobei eine der Streben vorzugsweise horizontal ausgerichtet ist, nämlich diejenige Strebe, welche zum Kontaktieren bzw. Anhaften an dem System funktionalisiert ist.

Die jeweilige Oszillationsempfindlichkeit kann positiv erhöht werden, wenn schwingbare Kontaktelemente an ihren Einspannseiten, mit welchen sie jeweils an einer Basis eingespannt sind, dicker ausgeführt sind als an ihren den Einspannseiten abgewandten freischwingbaren Kontaktelementeenden.

Die Einspannseiten der Kontaktelemente liegen sich hierbei derart gegenüber, dass sich die als ein Kontaktelementepaar zusammenarbeitenden Kontaktelemente zumindest teilweise überlappen; und zwar im Bereich ihrer freischwingbaren Enden.

Eine besonders bevorzugte Ausführungsvariante sieht vor, dass das erste Kontaktelement und das zweite Kontaktelement durch das System wirkverbunden sind, da hierdurch insbesondere rheologische Eigenschaften des Systems betriebssicher und präzise bestimmt werden können.

Das System kann besonders vorteilhaft untersucht werden, wenn zwischen dem ersten Kontaktelement und dem zweiten Kontaktelement ein Aufnahmeraum für ein gemeinsames System angeordnet ist. Insbesondere können das erste und das zweite Kontaktelement mit einem einzigen System insbesondere oszillierend miteinander wirkverbunden werden.

Der Aufnahmeraum ist vorliegend zum Anordnen eines körperlich ausgebildeten Schwingungsübertragungsmediums konzipiert. Hierbei ist ein solches Schwingungsübertragungsmedium vorteilhaft mittels des vorliegenden Systems bereitstellbar.

Der Aufnahmeraum ist hierbei räumlich zumindest durch das erste Kontaktelement einerseits und durch das zweite Kontaktelement andererseits begrenzt.

Eine betriebssichere Wirkverbindung mittels eines oszillierenden Systems von dem ersten und dem zweiten Kontaktelement kann gewährleistet werden, wenn an den Kontaktelementen funktionalisierte Kontaktflächen bzw. Anhaftflächen und der Aufnahmeraum zumindest teilweise deckungsgleich hierzu angeordnet sind.

Ferner ist es vorteilhaft, wenn der Aufnahmeraum aktiv variabel veränderbar ist. Durch einen solchen variabel veränderbaren Aufnahmeraum kann das System bedarfsweise fester oder weniger fest zwischen den Kontaktelementen aktiv geklemmt werden, wobei die Intensität des Klemmens aktiv einstellbar ist. Hierdurch kann das System für unterschiedliche Untersuchungen hinsichtlich Halte- bzw. Klemmkräfte variabel behandelt werden.

Auch ist es vorteilhaft, wenn der Aufnahmeraum in Abhängigkeit von dem System aktiv einstellbar ist, so dass die vorliegende Vorrichtung genauestens auf das jeweilige zu untersuchende System eingestellt werden kann.

Ein im Sinne der Erfindung variabel veränderbarer Aufnahmeraum kann beispielsweise dadurch erzielt werden, dass wenigstens ein Kontaktelement verlagerbar bzw. verfahrbar, vorzugsweise beide Kontaktelemente eines Kontaktelementepaars, zueinander verlagerbar bzw. verfahrbar sind, beispielsweise mittels rotatorischer und/oder translatorischer Bewegung.

Insofern beschreibt der Begriff "aktiv variabel veränderbar" einen Ausgangszustand oder Betriebszustand, bei welchen der Aufnahmeraum unabhängig von Oszillationen mindestens eines Kontaktelements veränderbar ist.

Bei einer entsprechend eingerichteten Vorrichtung ist es besonders zweckmäßig, wenn die Wirkung einer Anregung des ersten Kontaktelements an diesem ersten Kontaktelement oder an dem zweiten Kontaktelement detektierbar ist, um die mechanischen Eigenschaften des Systems zu bestimmen. Insbesondere rheologische Eigenschaften lassen sich hierdurch besonders gut ermitteln.

Ferner ist es vorteilhaft, wenn das erste Kontaktelement als Master-Kontaktelement ausgebildet ist, welches mit einem Anregungslaser aktiv von außen angeregt wird, um eine definierte Oszillation an der Kontakteinrichtung zu erzeugen. Das zweite Kontaktelement ist hingegen das Slave-Kontaktelement, welches entweder starr ausgelegt ist oder mit einem Ausleselaser wechselwirkt, um die erzielte Oszillation an der Kontakteinrichtung zu detektieren bzw. zu messen.

Insofern verfügt die Erfindung über ein gemeinsames Anregungs- und Auslese-Kontaktelement (Master) und ein Support-Kontaktelement (Slave), oder über ein Anregungs-Kontaktelement (Master) und ein Auslese-Kontaktelement (Slave), welche bevorzugt voneinander verschieden bzw. als eigene oszillierende Bauteile der vorliegenden Vorrichtung ausgestaltet sind.

Vorteilhafterweise ist ein Abstand zwischen zwei Kontaktelementen in Abhängigkeit von einer Dicke bzw. einem Durchmesser des Systems eingestellt bzw. einstellbar.

Des Weiteren ist es vorteilhaft, wenn das erste Kontaktelement und das zweite Kontaktelement, insbesondere mit ihren Kontakt- und/oder Anhaftflächen, mit einem Abstand von weniger als 25 oder 20 µm, vorzugsweise von 16 µm, voneinander beabstandet angeordnet sind. Durch derart gewählte Abstände können die Kontaktelemente eines Kontaktelementepaars nahe genug zueinander angeordnet werden, um das System sicher zwischen den Kontaktelementen zu halten. Insbesondere können mit derart gewählten Abständen rheologische Eigenschaften des Systems durch Oszillation sehr zuverlässig bestimmt werden.

In diesem Zusammenhang ist es außerdem vorteilhaft, wenn das erste Kontaktelement und das zweite Kontaktelement, insbesondere mit ihren Kontakt- und/oder Anhaftflächen, mit einem Abstand von mehr als 10 µm, vorzugsweise von mehr als 15 µm, voneinander beabstandet angeordnet sind. Mit derartigen Abständen kann die Gefahr von Messfehlern vermieden werden, beispielsweise dahingehend, dass das zweite Kontaktelement unmittelbar durch ein oszillierendes ersten Kontaktelement kritisch verfälscht in Schwingung versetzt wird und nicht nur ausschließlich oder überwiegend mittelbar mittels des anhaftenden Systems.

Um die Vorrichtung für unterschiedliche Systeme bzw. für eine Behandlung während einer Bestimmung des Systems anpassen bzw. einstellen zu können, ist es zweckmäßig, wenn ein voreingestellter Abstand aktiv veränderbar ist. Hierdurch können einerseits der Abstand und andererseits auch der Aufnahmeraum in Abhängigkeit von einem spezifisch zu untersuchenden System bzw. einem biologischen System variabel eingestellt werden.

Weiterhin ist es vorteilhaft, wenn zwei durch ein System miteinander wechselwirkende Kontaktelemente, also ein Kontaktelementepaar, an unterschiedlichen Seiten zum Kontaktieren bzw. Anhaften an dem System funktionalisiert bzw. ausgestaltet sind, wobei diese unterschiedlichen Seiten sich unmittelbar gegenüberliegend angeordnet sind. Hierdurch ist eine gleichzeitige Wechselwirkung des Systems mit zwei Kontaktelementen konstruktiv besonders einfach gewährleistet, speziell wenn beide Kontaktelemente als Cantilever ausgestaltet sind.

Insofern ist es einerseits zweckmäßig, wenn das erste Kontaktelement oberhalb des zweiten Kontaktelements angeordnet und an seiner Unterseite zum Kontaktieren bzw. Anhaften an dem System funktionalisiert ist.

Andererseits ist es hierbei zweckmäßig, wenn das zweite Kontaktelement unterhalb des ersten Kontaktelements angeordnet und an seiner Oberseite zum Kontaktieren bzw. Anhaften an dem System funktionalisiert ist.

Besonders zweckmäßig ist es konstruktiv somit auch, wenn das erste Kontaktelement und das zweite Kontaktelement an unterschiedlichen Seiten Kontakt- und/oder Anhaftflächen aufweist, wobei die Kontakt- und/oder Anhaftflächen der ersten und zweiten Kontaktelemente deckungsgleich gegenüberliegend angeordnet sind.

Sind das erste und das zweite Kontaktelement, insbesondere mit ihren Kontakt- und/oder Anhaftflächen, parallel zueinander verlaufend angeordnet, kann das System gleichmäßiger mit beiden Kontaktelementen wechselwirken. Hierdurch kann insbesondere auch die Qualität der Bestimmung von mechanischen Eigenschaften bzw. von rheologischen Eigenschaften wesentlich verbessert werden.

Sind das erste und das zweite Kontaktelement, insbesondere mit ihren Kontakt- und/oder Anhaftflächen, in einem Winkel zu einer Horizontalen angeordnet, kann insbesondere das rheologische Verhalten des Systems zusätzlich moduliert werden.

Auch die Einrichtung zum Anregen der Kontakteinrichtung kann konstruktiv verschieden realisiert sein. Ein besonders präzises und damit zuverlässiges Anregen kann vorteilhaft vorgenommen werden, wenn die Einrichtung zum Anregen der Kontakteinrichtung eine aktiv intensitätsmodulierbare Lichtquelle (Laser) aufweist. Insbesondere mittels eines Lasers kann eine kontaktlose Anregung des ersten Kontaktelements gut erfolgen, wodurch mechanische Störeinflüsse effektiv reduziert bzw. zur Gänze ausgeschlossen werden können.

Insofern ist es vorteilhaft, wenn die Einrichtung zum Anregen vorliegend eine photothermische Anregungseinrichtung umfasst, wodurch eine wesentlich präzisere Schwingungsanregung initiiert werden kann als bisher.

Es können beispielsweise auch höhere Frequenzen erreicht werden als bei einer Piezoanregung, da eine Resonanzfrequenz beispielsweise eines als Cantilever ausgelegten Kontaktelements höher sein kann als die eines Piezoelements, um entsprechende Schwingungen zu erzeugen.

Darüber hinaus kann im Zusammenhang mit einer photothermischen Anregungseinrichtung, welche mit einem Kontaktelement im Sinne der vorliegenden Erfindung wechselwirkt, auch eine geringere akustische Anregung anderer Komponenten erzielt werden, welche durch ein Medium um das Kontaktelement herum gekoppelt sind. Insbesondere, wenn eine Messung in einer Flüssigkeit erfolgt, welche kaum kompressibel ist, ergeben sich gegenüber einer Piezoanregung signifikante Vorteile, da mittels einer derartigen Piezoanregung an dem Kontaktelement in der Regel eine "Wand von Spitzen" verursacht wird.

Ferner ist es vorteilhaft, wenn die Einrichtung zum Anregen eine Einrichtung zum Erzeugen eines Frequenzdurchlaufs in einem oder mehreren Frequenzbereichen umfasst.

Bei einem solchen Frequenzdurchlauf bzw. Frequenz-Sweep kann beispielsweise ein vorgegebener Frequenzbereich vorzugsweise kontinuierlich durchlaufen, wodurch mechanische Eigenschaften eines Systems besonders vorteilhaft bestimmt werden können.

Vorliegend können die unterschiedlichen Frequenzen bzw. Frequenzdurchläufe vorteilhaft mittels photothermischer Anregung erzeugt werden.

Die hier eingesetzten Frequenzen können verschieden ausgewählt werden, insbesondere in Abhängigkeit von einem zu untersuchenden System.

Jedenfalls können im Sinne der Erfindung Frequenzen in einer Range von beispielsweise 1 Hz bis zu einigen hundert kHz eingesetzt werden, insbesondere in Abhängigkeit von dem zu untersuchenden System, der Einrichtung zum Anregen bzw. zum Detektieren von Schwingungen, der Kontaktelementegestalt, der gewählten Wirkverbindung zwischen Kontaktelementen und dem zu untersuchenden System, oder dergleichen.

Es hat sich gezeigt, dass vorteilhafte Anregungen des ersten Kontaktelements und somit auch des Systems erzielt werden kann, wenn die intensitätsmodulierbare Lichtquelle (Anregungs-Laser) mit einer Wellenlänge zwischen 350 nm und 1000 nm arbeitet.

Eine bevorzugte Anregung des ersten Kontaktelements erfolgt jedoch mit einer Wellenlänge von 405 nm oder 785 nm, wodurch insbesondere rheologische Eigenschaften des Systems besonders gut ermittelt werden können.

Bei einer Wellenlänge von etwa 405 nm ist eine geringere Lichtenergie bzw. eine entsprechend geringere elektromagnetische Strahlung erforderlich, um eine gewünschte Schwingungsamplitude zu erreichen.

Eine Wellenlänge von bzw. um 785 nm ist hingegen weniger phototoxisch, etwa für biologische Systeme, und darüber hinaus günstiger kombinierbar mit Fluoreszenz.

Hierbei ist es vorteilhaft, wenn die Einrichtung zum Anregen der Kontakteinrichtung an dem ersten Kontaktelement eine Kontakt- und/oder Anregungsfläche mit einem Durchmesser zwischen 15 µm und 3 µm erzeugt, wodurch eine sehr günstige Wechselwirkung zwischen der intensitätsmodulierbaren Lichtquelle und dem ersten Kontaktelement realisiert werden kann. Vorzugsweise hat die Kontakt- bzw. Anregungsfläche hierbei einen Durchmesser von 6 µm, da hierdurch das System für die Ermittlung von rheologischen Eigenschaften besonders vorteilhaft behandelt bzw. angeregt werden kann.

Jedenfalls ist es vorteilhaft, wenn die Kontakt- und/oder Anregungsfläche eine von einer Spitze bzw. pyramidenförmigen Spitze abweichende Gestalt, insbesondere eine flächige Gestalt, aufweist.

Jedoch können auch Kontaktelemente mit spitzen Kontakten gegenüber einem System eingesetzt werden, wenn dies für einen entsprechenden Einsatzbereich vorteilhafter erscheint.

Es versteht sich, dass auch die Einrichtung zum Detektieren von Schwingungen konstruktiv verschieden verwirklicht sein kann. Diese Einrichtung zum Detektieren kann unter Ausschluss von äußeren Einflüssen sehr genau arbeiten, wenn die Einrichtung zum Detektieren von Schwingungen eine weitere Lichtquelle (Auslese-Laser) aufweist.

Es hat sich gezeigt, dass sich Schwingungen des ersten oder zweiten Kontaktelements optisch mittels einer Wellenlänge zwischen 750 nm und 900 nm sehr präzise ermitteln lassen. Eine besonders störungsarme und insofern exakte Detektion einer diesbezüglichen Oszillation des Systems kann speziell bei einer modulierten Wellenlänge von 852 nm erzielt werden.

Erzeugt die Einrichtung zum Detektieren von Schwingungen an dem zweiten Kontaktelement eine Auslesefläche mit einem Durchmesser zwischen 15 µm und 30 µm, ergibt sich dort auch eine vorteilhafte Ausleseempfindlichkeit.

Eine besonders gute Sensibilität zum Bestimmen von rheologischen Eigenschaften insbesondere eines zellbiologischen Systems kann mit einer Auslesefläche von 21 µm im Durchmesser erreicht werden.

Die Aufgabe der Erfindung wird auch von einem Verfahren zum Bestimmen von mechanischen Eigenschaften, insbesondere von rheologischen Eigenschaften, eines Systems gelöst, bei welchem das System zwischen zwei Kontaktelementen angeordnet wird, und bei welchem zumindest ein Kontaktelement der zwei Kontaktelemente zum Schwingen photothermisch angeregt wird und Schwingungen des angeregten Kontaktelements detektiert werden, während die zwei Kontaktelemente mittels des Systems miteinander wirkverbunden sind, wobei das schwingbare Kontaktelement bzw. das System mit unterschiedlichen Frequenzen und/oder mit einem oder mehreren Frequenzdurchläufen zum Schwingen angeregt wird.

Durch dieses Verfahren kann das System besonders einfach aber dennoch hoch präzise insbesondere rheologisch charakterisiert werden, da das zu untersuchende System die Schwingungen derart beeinflusst, dass hierdurch Rückschlüsse auf dessen mechanische Eigenschaften gewonnen werden können, speziell wenn das schwingbare Kontaktelement kontaktlos photothermisch mit unterschiedlichen Frequenzen kumulativ oder alternativ mit einem oder mehreren Frequenzdurchläufen zum Schwingen angeregt wird.

Hierbei kann das zu untersuchende System oder zumindest zu untersuchende Teile hiervon eine Funktion eines Schwingungsüberträgers, genauer gesagt eines Schwingungsdämpfers übernehmen.

Es versteht sich, dass Frequenzdurchläufe unterschiedlich gestaltet werden können. Vorteilhaft ist es, wenn bei Frequenzdurchläufen ein Frequenzbereich kontinuierlich durchlaufen wird.

Die Aufgabe der Erfindung wird ferner von einem alternativen Verfahren zum Bestimmen von mechanischen Eigenschaften, insbesondere von rheologischen Eigenschaften, eines Systems (2), insbesondere eines biologischen Systems gelöst, bei welchem das System durch eine Primärschwingung photothermisch in Schwingung versetzt wird, wobei mittels des Systems eine Sekundärschwingung erzeugt wird, mittels welcher die mechanischen Eigenschaften des Systems bestimmt werden.

Mittels dieses Verfahrens tritt das System in Funktion eines Schwingungsüberträgers bzw. Schwingungsdämpfers von einer Anregungsseite zu einer Ausleseseite in Erscheinung, so dass insbesondere rheologische Eigenschaften des Systems exakt bestimmt werden können.

Vorteilhafterweise können hierbei Schwingungen an der Ausleseseite und gleichzeitig an der Anregungsseite initiierten Schwingungen detektiert werden, wodurch mechanische und speziell rheologische Eigenschaften des Systems kontinuierlich gemessen und bestimmt werden können.

Mit anderen Worten bedeutet dies, dass mittels der vorliegenden Verfahren frequenzabhängige Charaktereigenschaften an komplexeren Systemen vorgenommen werden können.

Eine vorliegend bevorzugt eingesetzte Verfahrensvariante sieht vor, dass die Primärschwingung an einem für das System funktionalisierten ersten Kontaktelement erzeugt wird, wobei die Sekundärschwingung an einem für das System funktionalisierten zweiten Kontaktelement detektiert wird. Durch das erste Kontaktelement kann die Anregungsseite sowohl konstruktiv als auch verfahrenstechnisch besonders einfach verwirklicht werden. Gleiches gilt hierbei für die Ausleseseite mit dem zweiten Kontaktelement.

Die Aufgabe der Erfindung wird alternativ auch von einem Verfahren zum Bestimmen von mechanischen Eigenschaften, insbesondere von rheologischen Eigenschaften, eines Systems, insbesondere eines biologischen Systems, gelöst, bei welchem mechanische Eigenschaften mittels einer durch das System erbrachten Schwingungsübertragung von einem ersten schwingungsangeregten Kontaktelement auf ein zweites Kontaktelement detektiert werden.

Dadurch, dass das System als Schwingungsübertragungsmedium zwischen zwei Kontaktelementen für dieses System angeordnet ist, können insbesondere auch rheologische Eigenschaften dieses Systems präziser bestimmt werden.

Die Aufgabe der Erfindung wird des Weiteren auch noch von einem Verfahren zum Bestimmen von mechanischen Eigenschaften, insbesondere von rheologischen Eigenschaften, eines Systems, insbesondere eines biologischen Systems, gelöst, bei welchem das System an einem ersten schwingfähigen Kontaktelement und an einem zweiten schwingfähigen Kontaktelement, insbesondere anhaftend, angeordnet wird, bei welchem das erste Kontaktelement primär schwingungsangeregt wird, wobei die primäre Schwingungsanregung des ersten Kontaktelements mittels des Systems auf das zweite Kontaktelement übertragen wird, und bei welchem die hierdurch an dem zweiten Kontaktelement erzeugte sekundäre Schwingungsanregung detektiert wird, wodurch die mechanischen Eigenschaften des Systems mittels der sekundären Schwingungsanregung bestimmt werden.

Hierbei oszillieren die beiden Kontaktelemente im Sinne von Schwingern bevorzugt jeweils als Cantilever, wobei die beiden Kontaktelemente mittels des Systems schwingungswirkverbunden werden bzw. sind, wodurch insbesondere auch rheologische Eigenschaften des Systems exakt bestimmt werden können.

Insofern ist es vorteilhaft, wenn die Anregungen des ersten Kontaktelements an dem zweiten Kontaktelement detektiert werden, um die mechanischen Eigenschaften des Systems zu bestimmen.

Besonders präzise Messungen können mittels der Verfahren vorgenommen werden, wenn die Schwingungen photothermisch erzeugt werden.

Jedenfalls ist es vorteilhaft, wenn das System durch eine Primärschwingung angeregt wird, wobei mittels des Systems eine Sekundärschwingung erzeugt wird, mittels welcher die mechanischen Eigenschaften und insbesondere die rheologischen Eigenschaften des Systems bestimmt werden.

An dieser Stelle sei noch festgehalten, dass der Erfindung insbesondere die Erkenntnis zugrunde liegt, dass es für die Bestimmung mechanischer und insbesondere rheologischer Eigenschaften eines Systems vorteilhaft ist, wenn mittels dieses Systems ein Koppelglied zwischen dem ersten Kontaktelement und dem zweiten Kontaktelement erzeugt wird.

Eine besonders bevorzugte Verfahrensvariante sieht vor, dass das schwingbare Kontaktelement bzw. das System mit unterschiedlichen Frequenzen und/oder mit einem oder mehreren Frequenzdurchläufen zum Schwingen angeregt werden, wodurch im Sinne der Erfindung mechanische Eigenschaften des Systems besonders vielschichtig und präzise bestimmt werden können.

Bei einem solchen Frequenzdurchlauf bzw. Frequenz-Sweep wird ein vorgegebener Frequenzbereich bevorzugt kontinuierlich durchlaufen, wodurch mechanische Eigenschaften eines Systems sehr gut bestimmt werden können.

Eine signifikante Steigerung des Auflösungsvermögens der vorliegenden Verfahren kann erzielt werden, wenn verschiedene Frequenzen gleichzeitig angewendet werden. Hierdurch kann alternativ eine deutliche Verbesserung der vorliegenden Verfahren erzielt werden, im Gegensatz zu Verfahren, bei welchen etwa lediglich eine Abfolge von Frequenzen angewendet wird.

Die Verfahren können noch vorteilhafter durchgeführt werden, wenn mechanische bzw. rheologische Eigenschaften des Systems frequenzaufgelöst bzw. frequenzabhängig bestimmt werden.

Insofern handelt es sich vorteilhaftweise um frequenzabhängige Verfahren zum Bestimmen von rheologischen Eigenschaften von Systemen gemäß der Erfindung, wie im Speziellen von biologischen oder materialwissenschaftlichen, viskoelastischen Systemen.

Hierbei können die unterschiedlichen Frequenzen bzw. Frequenzdurchläufe vorteilhaft mittels photothermischer Anregung erzeugt werden.

Insofern ist es vorteilhaft, wenn das schwingbare bzw. das zum Schwingen anregbare Kontaktelement photothermisch angeregt wird.

Eine andere Verfahrensvariante sieht ferner noch vor, dass das System zuerst mit dem ersten Kontaktelement in Wirkkontakt gebracht wird, um die Masse des Systems zu bestimmen, und erst daran anschließend das System zusätzlich mit dem zweiten Kontaktelement in Wirkkontakt gebracht wird, um zusätzlich mechanische Eigenschaften bzw. rheologische Eigenschaften des Systems zu bestimmen. Bei dieser bevorzugten Verfahrensvariante können sowohl die Masse als auch weitere mechanische Eigenschaften des Systems mit einer Verfahrensdurchführung ermittelt bzw. bestimmt werden.

Die vorliegenden Verfahren können besonders vorteilhaft mit den entsprechend eingerichteten Vorrichtungen dieser Erfindung durchgeführt werden.

Die Aufgabe der Erfindung wird auch von einer Verwendung von zwei benachbarten Cantilevern zum gleichzeitigen Haltern eines Systems, insbesondere eines biologischen Systems, während des Bestimmens von mechanischen Eigenschaften, insbesondere von rheologischen Eigenschaften, gelöst.

Wie bereits mehrfach erläutert, kann hierdurch das vorliegende System erweitert untersucht bzw. nochmals genauer untersucht werden.

Die Aufgabe der Erfindung wird auch von einer Verwendung eines Systems, insbesondere eines biologischen Systems, zum Erzeugen eines Koppelglieds für ein Dämpfen und/oder Übertragen von Schwingungen zwischen zwei Kontaktelementen einer Kontakteinrichtung zum Tragen dieses Systems an einer Vorrichtung zum Bestimmen von mechanischen Eigenschaften.

Hierdurch kann anhand des Koppelglieds und die damit ermöglichte Schwingungsübertragung konstruktiv und verfahrenstechnisch besonders einfach ein System hinsichtlich mechanischer und insbesondere rheologischer Eigenschaften untersucht werden.

Aufgrund der Verwendung des Systems als Koppelglied kann auf ein zusätzliches mechanisches Bauteil an der Vorrichtung verzichtet werden, um Kontaktelemente in Schwingungen zu versetzen.

Ferner kann das System bei der vorliegenden Erfindung als Dämpferelement zum Dämpfen eines von außen angeregten Schwingungssystems verwendet werden.

Mit anderen Worten: Die vorliegende Vorrichtung besitzt ein Dämpferelement zum Dämpfen einer Schwingungsanregung in Gestalt eines Systems.

Insgesamt kann festgehalten werden, dass mittels der vorliegenden Erfindung sehr gut rheologische Eigenschaften eines Systems bzw. eines biologischen Systems ermittelt werden können, wobei mittels der hierdurch gewonnenen Erkenntnisse auch weitere Eigenschaften des Systems, insbesondere auch mechanische Eigenschaften, bestimmt werden können.

Hier sei noch darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

An dieser Stelle sei ebenfalls noch erwähnt, dass im Rahmen der hier vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

Es sei des Weiteren beansprucht, dass die beschriebenen Verfahren auch noch durch weitere hier beschriebene technische Merkmale, insbesondere durch Merkmale der Vorrichtung, ergänzt werden können, um die Verfahren vorteilhaft weiterzuentwickeln bzw. Verfahrensspezifikationen noch präziser darstellen bzw. formulieren zu können.

An dieser Stelle sei explizit erwähnt, dass die vorliegende Erfindung sowohl konstruktiv als auch verfahrenstechnisch besonders vorteilhaft realisiert sein kann, insbesondere durch erstens Rheologie mittels AFM, durch zweitens photothermische Anregung zur direkten Anregung eines Kontaktelements und drittens durch auf das jeweilige System abgestimmte Frequenzdurchläufe im Gegensatz beispielsweise zu einer Anregung einer bestimmten Menge an Frequenzen sequentiell oder parallel kombiniert. Wobei eine Detektion von angeregten Schwingungen vorzugsweise direkt an dem angeregten Kontaktelement oder alternativ an einem über ein System mit dem angeregten Kontaktelement in Wirkverbindung stehenden weiteren Kontaktelement erfolgt.

Es versteht sich, dass die Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Besonders vorteilhaft ist eine Kombination aus frequenzabhängiger Charakterisierung bzw. Bestimmung von frequenzabhängigen Eigenschaften und photothermischer Anregung wenigstens eines Kontaktelements, da eine äußerst präzise Schwingungsanregung auch eine besonders genaue Bestimmung von Eigenschaften des Systems vorteilhaft begünstigt.

Weitere Merkmale, Effekte und Vorteile vorliegender Erfindung werden anhand anliegender Zeichnung und nachfolgender Beschreibung erläutert, in welchen beispielhaft eine Vorrichtung zum frequenzabhängigen Bestimmen von mechanischen Eigenschaften eines biologischen Systems dargestellt und beschrieben ist.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine Teilansicht einer Messvorrichtung zum frequenzabhängigen Bestimmen bzw. zur frequenzabhängigen Charakterisierung von mechanischen Eigenschaften, insbesondere von rheologischen Eigenschaften, eines Systems, hinsichtlich ihrer Kontakteinrichtung zum Kontaktieren des Systems mit zwei Kontaktelementen zum gemeinsamen Kontaktieren bzw. Halten des Systems;
- Figur 2: schematisch eine weitere Ansicht der Kontakteinrichtung aus der Figur 1 mit einem gleichzeitig an den zwei Kontaktelementen angeordneten System;
- Figur 3: schematisch eine erweiterte Ansicht der Messvorrichtung aus den Figuren 1 und 2;
- Figur 4: schematisch eine Teilansicht einer bevorzugten Messvorrichtung zum frequenzabhängigen Bestimmen bzw. zur frequenzabhängigen Charakterisierung von mechanischen Eigenschaften, insbesondere von rheologischen Eigenschaften, eines Systems, hinsichtlich ihrer Kontakteinrichtung mit einem schwingbaren, ersten Kontaktelement umfassend eine spitz ausgebildete Kontakt- bzw. Anlagefläche und mit einem demgegenüber nicht schwingbaren bzw. eigensteifen, weiteren Kontaktelement;
- Figur 5: schematisch eine Teilansicht der Messvorrichtung aus Figur 4 in einer alternativen Konfiguration mit einer halbkreisförmig ausgebildeten Kontakt- bzw. Anlagefläche an dem schwingbaren, ersten Kontaktelement; und
- Figur 6: schematisch eine Teilansicht der Messvorrichtung aus Figur 4 in einer anderen Konfiguration mit einer gänzlich eben ausgebildeten Kontakt- bzw. Anlagefläche an dem schwingbaren, ersten Kontaktelement.

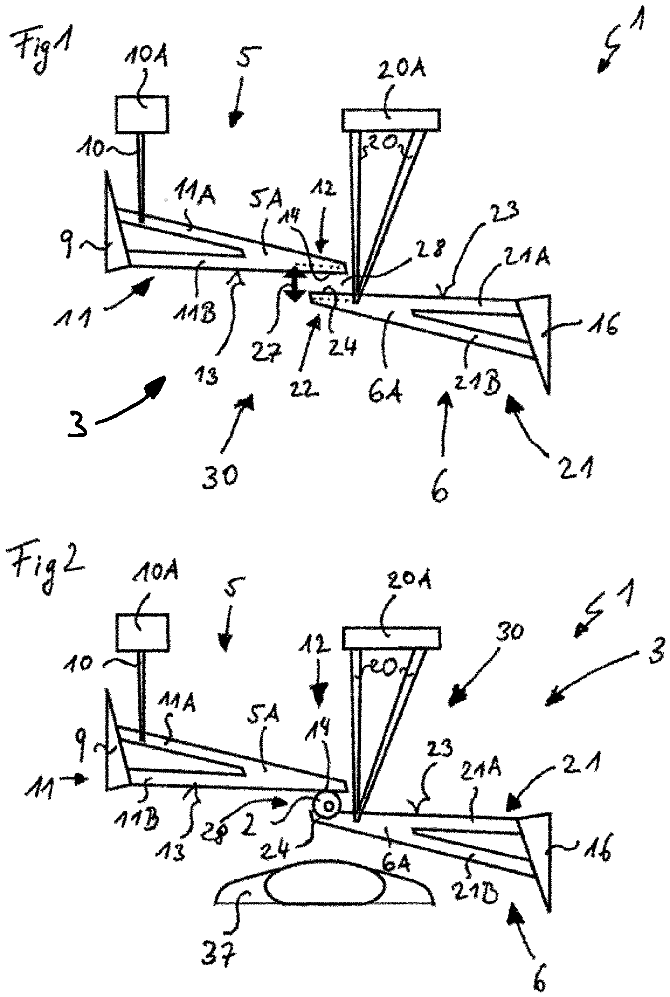

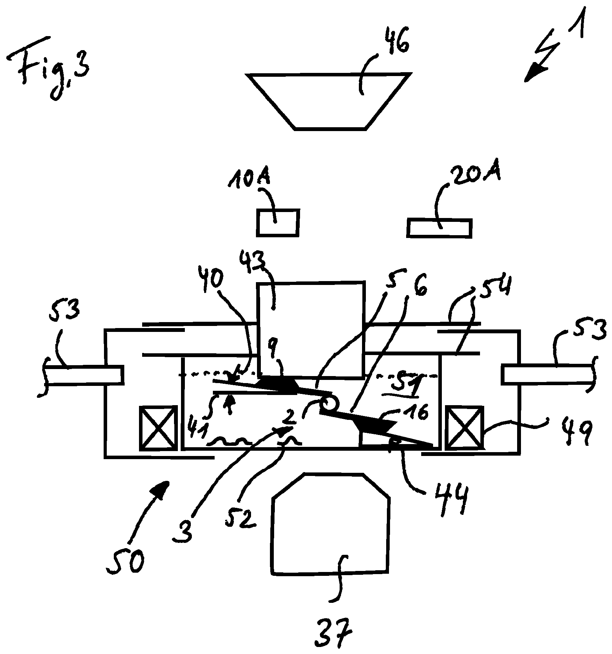

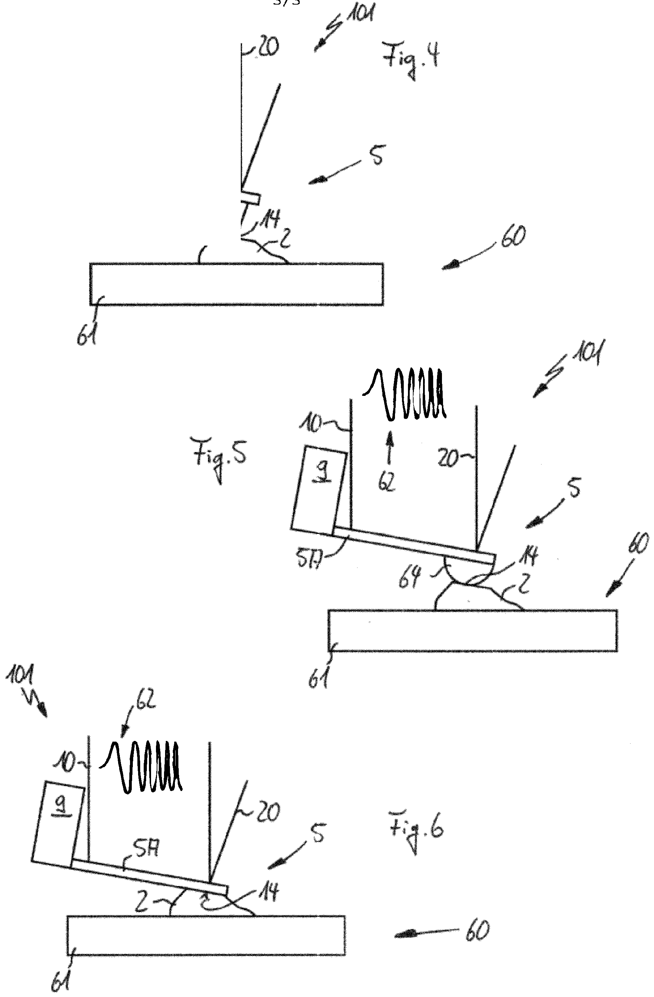

Die in den Figuren 1 bis 3 auch nur teilweise gezeigte Messvorrichtung 1 zum frequenzabhängigen Bestimmen von mechanischen bzw. rheologischen Eigenschaften eines Systems 2 (s. Figuren 3 und 4) besitzt eine Kontakteinrichtung 3 zum Halten bzw. Tragen dieses Systems 2. Das System 2 ist hierbei beispielhaft ein biologisches System 2.

Bei dem biologischen System 2 handelt es sich um eine Zelle (nicht nochmals beziffert) eines Säugetiers, welche insbesondere hinsichtlich ihrer rheologischen Eigenschaften untersucht werden soll.

Die Kontakteinrichtung 3 umfasst in dieser ersten Ausführung ein erstes schwingbares Kontaktelement 5 sowie ein zweites schwingbares Kontaktelement 6, an welchen das biologische System 2 gleichzeitig wirken bzw. gegebenenfalls auch anhaften kann.

Das erste Kontaktelement 5 ist hierbei als ein Master-Cantilever 5A ausgebildet, welcher an einer Basis 9 als ein Kragarm angeordnet ist und welcher durch einen Anregungs-Laser 10 mit einer Wellenlänge von 405 nm einer nicht näher gezeigten intensitätsmodulierte Lichteinrichtung zum Schwingen angeregt werden kann, wobei die intensitätsmodulierte Lichteinrichtung einer Einrichtung 10A zum Anregen der Kontakteinrichtung 3 zugeordnet ist.

Insbesondere können hierbei verschiedene Frequenzen gleichzeitig bzw. simultan an der Kontakteinrichtung 3 erzeugt werden.

Der Master-Cantilever 5A besitzt in diesem Ausführungsbeispiel einen dreieckförmigen Grundkörper 11 aus zwei spitz zulaufenden Einzelstreben 11A und 11B, so dass das erste Kontaktelement 5 an seinem freischwingbaren Ende 12 besonders gute Oszillationseigenschaften besitzt.

Die erste Kontakteinrichtung 5 ist an ihrer Unterseite 13 mit einer ersten Anhaftfläche 14 der Kontakteinrichtung 3 derart funktionalisiert, dass das biologische System 2 dort besonders gut anhaften kann.

Das zweite Kontaktelement 6 ist hingegen als ein Slave-Cantilever 6A ausgebildet, welcher an einer weiteren Basis 16 als ein weiterer Kragarm angeordnet ist. Schwingungen dieses Slave-Cantilever 6A können durch einen Auslese-Laser 20 mit einer Wellenlänge von 852 nm einer nicht näher gezeigten weiteren Lichteinrichtung detektiert und ausgelesen werden. Die weitere Lichteinrichtung ist hierbei einer Einrichtung 20A zum Detektieren von Schwingungen an der Kontakteinrichtung 3 zugeordnet.

Der Slave-Cantilever 6A besitzt in diesem Ausführungsbeispiel ebenfalls einen dreieckförmigen Grundkörper 21 aus zwei spitz zulaufenden weitere Einzelstreben 21A und 21B der Kontakteinrichtung 3, so dass das zweite Kontaktelement 6 an seinem freischwingbaren Ende 22 ebenfalls sehr gute Oszillationseigenschaften besitzt.

Die zweite Kontakteinrichtung 6 ist an ihrer Oberseite 23 mit einer zweiten Anhaftfläche 24 der Kontakteinrichtung 3 derart funktionalisiert, dass das biologische System 2 auch an dem zweiten Kontaktelement 6 gut anhaften kann.

Die beiden Kontaktelemente 5 und 6 sind in diesem Ausführungsbeispiel insbesondere auch hinsichtlich ihrer Anhaftflächen 14 und 24 mit einem Abstand 27 von 16 µm zueinander beabstandet angeordnet.

Der Abstand 27 ist hierbei von der Unterseite 13 bzw. der ersten Anhaftfläche 14 des ersten Kontaktelements 5 her bis zu der Oberseite 22 bzw. der zweiten Anhaftfläche 24 des zweiten Kontaktelements 6 hin gemessen, wobei die beiden Kontaktelemente 5 und 6, genauer gesagt die Unterseite 13 (Unterstrebe 11B) und die Oberseite 23 (weitere Oberstrebe 21A) parallel zueinander ausgerichtet sind.

Die beiden Kontaktelemente 5 und 6 überlappen sich im Bereich ihrer freischwingenden Enden 12 und 22, wodurch ein Aufnahmeraum 28 für das biologische System 2 (s. Figuren 2 und 3) an der Kontakteinrichtung 3 formuliert ist.

Insofern bilden die beiden Kontaktelemente 5 und 6 ein Kontaktelementepaar 30, mittels welchem das biologische System 2 zumindest zweiseitig in der Messvorrichtung 1 und im Raum frei schwingend gehaltert werden kann.

Gemäß den Darstellungen nach den Figuren 2 und 3 ist gut zu erkennen, dass das biologische System 2 zum Bestimmen insbesondere dessen rheologischer Eigenschaften gleichzeitig an beiden Kontaktelementen 5 und 6 anhaftet.

Insofern sind das erste Kontaktelement 5 und das zweite Kontaktelement 6 durch das biologische System 2 miteinander wirkverbunden, und zwar in der Weise, dass Schwingungen des von dem Anregungs-Laser 10 angeregten ersten Kontaktelements 5 auf das zweite Kontaktelement 6 übertragen werden, und dessen Schwingungen wiederum von dem Auslese-Laser 20 detektiert werden. Insofern kann hierbei eine frequenzabhängige Charakterisierung des biologischen Systems 2 in Kombination mit einer photothermischen Anregung besonders präzise vorgenommen werden.

Das bedeutet, dass das biologische System 2 ein mechanisches Koppelglied 35 der Kontakteinrichtung 3 ist, welches zwischen den beiden Kontaktelementen 5 und 6 eingeklemmt ist.

Die Figur 2 zeigt des Weiteren noch eine Mikroskopeinrichtung 37, welche unterhalb der Kontakteinrichtung 3 platziert ist.

Gemäß der erweiterten Darstellung nach der Figur 3 ist hinsichtlich der Messvorrichtung 1 zusätzlich noch gezeigt, dass die Kontakteinrichtung 3 alternativ in einem Winkel 40 zu einer Horizontalen 41 ausgerichtet werden kann. Hierzu verfügt die Messvorrichtung 1 über entsprechend einstellbare Halteeinrichtungen 43 und 44, welche die jeweilige Basis 9 bzw. 16 für die Kontakteinrichtungen 5 und 6 umfassen.

Die Mikroskopeinrichtung 37 weist auch noch eine Beleuchtung 46 auf, mittels welcher das biologische System 2 für weitere morphologische Untersuchungen sogleich noch durchleuchtet werden kann.

Insofern kann eine frequenzabhängige Charakterisierung des biologischen Systems 2 - oder auch einem anderen System - in Kombination mit einer photothermischen Anregung und einer Mikroskopeinrichtung 37 besonders präzise vorgenommen werden.

Ferner weist die Messvorrichtung 1 noch eine durch eine Heizeinrichtung 49 beheizbare Doppelkammer 50 auf, um die Umgebung 51 für das biologische System 2 und diesbezügliche Petri-Schalen 52 zum Bevorraten weiterer biologischer Systeme 2 hinsichtlich Temperatur, Luftfeuchtigkeit und Atmosphäre usw. optimal zu beeinflussen. Die Doppelkammer 50 weist noch Gaszugänge 53 sowie Verschlussdeckel 54 auf.

Die in den Figuren 4, 5 und 6 gezeigten Abwandlungen einer alternativen Messvorrichtung 101 zum frequenzabhängigen Bestimmen von mechanischen bzw. rheologischen Eigenschaften eines Systems 2 stimmen konstruktiv im Wesentlichen mit der in Figur 1 gezeigten Messvorrichtung 1 überein. Insofern wird hinsichtlich Merkmale, Vorteile und Effekte zusätzlich auf die vorstehenden Erläuterungen verwiesen. Bei dem vorliegenden System 2 handelt es sich ebenfalls um ein biologisches System 2, wobei auch ein anderes System im Sinne der Erfindung Verwendung finden kann.

Die nunmehr in den Figuren 4, 5 und 6 zumindest teilweise gezeigte alternative Messvorrichtung 101 zeichnet sich durch eine etwas anders ausgelegte Kontakteinrichtung 3 aus, welche einerseits ein schwingbares, erstes Kontaktelement 5 aufweist, welches in einer Basis 9 gelagert ist. Andererseits weist die etwas anders ausgelegte Kontakteinrichtung 3 ein weiteres Kontaktelement 60 auf, welches eine ausreichend hohe Eigensteifigkeit besitzt, so dass es im Gegensatz zu dem schwingbaren, ersten Kontaktelement 5 nicht im Sinne der Erfindung angeregt werden kann, zumindest nicht mittels des Anregungs-Lasers 10, mit welchem das schwingbare, erste Kontaktelement 5 photothermisch kontaktlos anregbar ist.

Gemäß der alternativen Messvorrichtung 101 ist das weitere Kontaktelement 60 durch ein Substrat 61 realisiert, welches das System 2 umfasst, während das schwingbare, erste Kontaktelement 5 nach wie vor als Cantilever 5A aufgebaut ist. Insofern baut die alternative Messvorrichtung 101 einfacher als die vorherige Messvorrichtung 1.

Im Gegensatz zu der Messvorrichtung 1 aus den Figuren 1 bis 3 kommuniziert bei der alternativen Messvorrichtung 101 sowohl der Anregungs-Laser 10 (Anregungseinrichtung 10A, vgl. Figur 1) als auch der Auslese-Laser 20 (Detektiereinrichtung 20A, vgl. Figur 1) nur mit dem schwingbaren, ersten Kontaktelement 5 kontaktlos, wobei der Anregungs-Laser 10 hierbei einen Frequenz-Sweep 62 mit ansteigender Frequenz bereitstellt.

Insbesondere können hierbei verschiedene Frequenzen gleichzeitig bzw. simultan an dem Kontaktelement 5 erzeugt werden.

Während bei der Ausführung gemäß der Figur 4 das schwingbare, erste Kontaktelement 5 mit einer spitzen bzw. pyramidenförmigen Kontaktfläche 14 bzw. mit einem entsprechend spitz bzw. pyramidenförmig geformten Kontaktteil 63 das System 2 kontaktiert, ist bei der Ausführung gemäß der Figur 5 die Kontaktfläche 14 bzw. ein entsprechendes Kontaktteil 64 vielmehr sphärisch ausgebildet. Die im Wesentlichen halbkreisförmige Kontaktfläche 14 bzw. das entsprechende Kontaktteil 64 können durch eine untere Hälfte einer Kugel oder auch durch ein Ende einer anderen Form ausgeformt sein, welches sich durch einen Halbkreis oder dergleichen beschreiben lässt.

Die Ausführung gemäß der Figur 6 zeigt hingegen eine Ausführung, bei welcher das schwingbare, ersten Kontaktelement 5 eine plane Kontaktfläche 14 besitzt, um mit dem System 2 oder dergleichen zu kommunizieren.

Insbesondere hinsichtlich der Ausführungen gemäß der Figuren 4 und 5 können auch alternative Systeme eingesetzt werden, welche flach sind, wie beispielsweise ein polymerischer Film. Mit anderen Worten: Das in den Figuren 4 und 5 gezeigte System 2 kann sich als alternatives System durch eine sich horizontal erstreckende, flache Gestalt, beispielsweise ein flaches Rechteck, auszeichnen, welche das Kontaktelement bzw. das Substrat 61 bevorzugt vollständig bedeckt, zumindest in Bezug auf die dem Master-Cantilever bzw. Cantilever zugewandten Seite.

An dieser Stelle sei explizit darauf hingewiesen, dass die Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei den vorstehend erläuterten Ausführungsbeispielen lediglich um erste Ausgestaltungen der Erfindung handelt. Insofern beschränkt sich die Ausgestaltung der Erfindung nicht auf diese Ausführungsbeispiele.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste:

- 1: Messvorrichtung
- 2: biologisches oder materialwissenschaftliches, viskoelastisches System
- 3: Kontakteinrichtung
- 5: schwingbares bzw. erstes schwingbares Kontaktelement
- 5A: Master-Cantilever bzw. Cantilever
- 6: zweites schwingbares Kontaktelement
- 6A: Slave-Cantilever
- 9: Basis
- 10: Anregungs-Laser
- 10A: Einrichtung zum Anregen der Kontakteinrichtung
- 11: dreieckförmiger Grundkörper
- 11A: erste Einzelstrebe bzw. Oberstrebe
- 11B: zweite Einzelstrebe bzw. Unterstrebe
- 12: freischwingbares Ende
- 13: Unterseite
- 14: erste Kontakt- bzw. Anhaftfläche, pyramidenförmige Kontaktfläche
- 16: weitere Basis
- 20: Auslese-Laser
- 20A: Einrichtung zum Detektieren von Schwingungen
- 21: dreieckförmiger Grundkörper
- 21A: erste weitere Einzelstrebe bzw. weitere Oberstrebe
- 21B: zweite weitere Einzelstrebe bzw. weitere Unterstrebe
- 22: weiteres freischwingbares Ende
- 23: Oberseite
- 24: zweite Kontakt- bzw. Anhaftfläche
- 27: Abstand
- 28: Aufnahmeraum
- 30: Kontaktelementepaar
- 35: Koppelglied
- 37: optische Mikroskopeinrichtung
- 40: Winkel
- 41: Horizontale
- 43: obere Halteeinrichtung
- 44: untere Halteeinrichtung
- 46: Beleuchtung
- 50: beheizbare Doppelkammer
- 51: Umgebung
- 52: Petri-Schalen
- 53: Gaszugänge
- 54: Verschlussdeckel

- 60: weiteres Kontaktelement
- 61: Substrat
- 62: Frequenz-Sweep
- 63: spitz bzw. pyramidenförmiges Kontaktteil
- 64: sphärisches Kontaktteil

- 101: alternative Messvorrichtung

## Patentansprüche

1. Vorrichtung (1; 101) zum Bestimmen von mechanischen Eigenschaften, nämlich von rheologischen, viskoelastischen Eigenschaften, eines viskoelastischen Systems (2), mit einem schwingbaren Kontaktelement (5) und mit einem weiteren Kontaktelement (5; 60), bei welcher die beiden Kontaktelemente (5, 6; 60) derart zueinander angeordnet sind, dass sie mittels des Systems (2) miteinander wirkverbindbar sind, mit einer Einrichtung (10A) zum photothermischen Anregen des schwingbaren Kontaktelements (5), und mit einer Einrichtung (20A) zum Detektieren von Schwingungen und insofern der rheologischen, viskoelastischen Eigenschaften an dem angeregten schwingbaren Kontaktelement (5), wobei sowohl die Einrichtung (10A) zum Anregen als auch die Einrichtung (20A) zum Detektieren mit dem schwingbaren Kontaktelement (5) wechselwirkt, wobei das schwingbare Kontaktelement (5) bzw. das System (2) mit unterschiedlichen Frequenzen und/oder mit einem oder mehreren Frequenzdurchläufen (62) zum Schwingen anregbar sind.

2. Vorrichtung (1; 101) nach Anspruch 1, ***dadurch gekennzeichnet, dass*** die Einrichtung (10A) zum photothermischen Anregen derart dazu eingerichtet ist, dass ein schwingbares Kontaktelement (6) gleichzeitig mit verschiedenen Frequenzen anregbar ist.

3. Vorrichtung (1; 101) nach Anspruch 1 oder 2, ***dadurch gekennzeichnet, dass*** das erste Kontaktelement (5) und/oder das zweite Kontaktelement (6; 60) jeweils einen Cantilever (5A, 6A), insbesondere Mikrocantilever, umfassen.

4. Vorrichtung (1; 101) nach einem der Ansprüche 1 bis 3, ***dadurch gekennzeichnet, dass*** zwischen dem ersten Kontaktelement (5) und dem zweiten Kontaktelement (6; 60) ein Aufnahmeraum (28) für ein gemeinsames System (2) angeordnet ist, wobei insbesondere der Aufnahmeraum (28) aktiv variabel veränderbar ist.

5. Vorrichtung (1; 101) nach einem der Ansprüche 1 bis 4, ***dadurch gekennzeichnet, dass*** die Wirkung einer Anregung des ersten Kontaktelements (5) an dem ersten Kontaktelement (5) oder an dem zweiten Kontaktelement (6) detektierbar ist, um die mechanischen Eigenschaften des Systems (2) zu bestimmen.

6. Vorrichtung (1; 101) nach einem der Ansprüche 1 bis 5, ***dadurch gekennzeichnet, dass*** das erste Kontaktelement (5) und das zweite Kontaktelement (6; 60), insbesondere mit ihren Kontakt- und/oder Anhaftflächen (14, 24), mit einem Abstand (27) von weniger als 25 µm oder 20 µm, vorzugsweise von 16 µm, voneinander beabstandet angeordnet sind, und/oder erste Kontaktelement (5) und das zweite Kontaktelement (6; 60), insbesondere mit ihren Kontakt- und/oder Anhaftflächen (14, 24), mit einem Abstand (27) von mehr als 10 µm, vorzugsweise von mehr als 15 µm, voneinander beabstandet angeordnet sind, wobei insbesondere ein voreingestellter Abstand (27) zwischen dem ersten Kontaktelement (5) und dem zweiten Kontaktelement (6; 60) aktiv veränderbar ist.

7. Vorrichtung (1; 101) nach einem der Ansprüche 1 bis 6, ***dadurch gekennzeichnet, dass*** zwei durch ein System (2) miteinander wechselwirkende Kontaktelemente (5, 6), also ein Kontaktelementepaar (30), an unterschiedlichen Seiten (13, 23) zum Kontaktieren bzw. Anhaften an dem System (2) funktionalisiert sind, wobei diese unterschiedlichen Seiten (13, 23) sich unmittelbar gegenüberliegend angeordnet sind.

8. Vorrichtung (1; 101) nach einem der Ansprüche 1 bis 7, ***dadurch gekennzeichnet, dass*** die Einrichtung (10A) zum Anregen eine photothermische Anregungseinrichtung (10A) umfasst und/oder die Einrichtung (10A) zum Anregen eine Einrichtung (10A) zum Erzeugen eines Frequenzdurchlaufs (62) in einem oder mehreren Frequenzbereichen umfasst.

9. Verfahren zum Bestimmen von mechanischen Eigenschaften, nämlich von rheologischen, viskoelastischen Eigenschaften, eines viskoelastischen Systems (2), bei welchem das System (2) zwischen zwei Kontaktelementen (5, 6; 60) angeordnet wird, und bei welchem zumindest ein Kontaktelement (5) der zwei Kontaktelemente (5, 6; 60) zum Schwingen photothermisch angeregt wird und Schwingungen des angeregten Kontaktelements (5) und insofern dort auch die rheologischen, viskoelastischen Eigenschaften detektiert werden, während die zwei Kontaktelemente (5, 6; 60) mittels des Systems (2) miteinander wirkverbunden sind, wobei das schwingbare Kontaktelement (5) bzw. das System (2) mit unterschiedlichen Frequenzen und/oder mit einem oder mehreren Frequenzdurchläufen (62) zum Schwingen angeregt wird.

10. Verfahren nach Anspruch 9, ***dadurch gekennzeichnet, dass*** bei Frequenzdurchläufen (62) ein Frequenzbereich kontinuierlich durchlaufen wird.

11. Verfahren nach Anspruch 9 oder 10, ***dadurch gekennzeichnet, dass*** das schwingbare Kontaktelement (5) bzw. das System (2) mit unterschiedlichen Frequenzen und/oder mit einem oder mehreren Frequenzdurchläufen (62) zum Schwingen angeregt wird, wobei insbesondere bei Frequenzdurchläufen (62) ein Frequenzbereich kontinuierlich durchlaufen wird.

12. Verfahren nach einem der Ansprüche 9 bis 11, ***dadurch gekennzeichnet, dass*** verschiedene Frequenzen gleichzeitig angewendet werden.

13. Verfahren nach einem der Ansprüche 9 bis 12, ***dadurch gekennzeichnet, dass*** mechanische bzw. rheologische Eigenschaften des Systems frequenzaufgelöst bzw. frequenzabhängig bestimmt werden.

14. Verfahren nach einem der Ansprüche 9 bis 13, ***dadurch gekennzeichnet, dass*** das System (2) zuerst mit dem ersten Kontaktelement (5) in Wirkkontakt gebracht wird, um die Masse des Systems (2) zu bestimmen, und erst daran anschließend das System (2) zusätzlich mit dem zweiten Kontaktelement (6; 60) in Wirkkontakt gebracht wird, um zusätzlich mechanische Eigenschaften bzw. rheologische Eigenschaften des Systems (2) zu bestimmen.

## Claims

1. Apparatus (1; 101) for determining mechanical properties, namely rheological, viscoelastic properties, of a viscoelastic system (2), comprising an oscillatable contact element (5) and a further contact element (5; 60), in which apparatus both contact elements (5, 6; 60) are arranged in such a manner relative to one another that they can be operatively connected to one another by means of the system (2), further comprising a device (10A) for photothermal excitation of the oscillatable contact element (5), and a device (20A) for detecting oscillations and thus the rheological, viscoelastic properties at the excited oscillatable contact element (5), wherein both the excitation device (10A) and the detection device (20A) interact with the oscillatable contact element (5), wherein the oscillatable contact element (5) or the system (2) can be excited to oscillate with different frequencies and/or with one or more frequency sweeps (62).

2. The apparatus (1; 101) according to claim 1, **characterized in that** the photothermal excitation device (10A) is configured in such a manner that an oscillatable contact element (6) can be excited with different frequencies concurrently.

3. The apparatus (1; 101) according to claim 1 or 2, **characterized in that** the first contact element (5) and/or the second contact element (6; 60) each comprise a cantilever (5A, 6A), more particularly a micro-cantilever.

4. The apparatus (1; 101) according to one of the claims 1 to 3, **characterized in that** a receiving space (28) for a common system (2) is arranged between the first contact element (5) and the second contact element (6; 60), wherein in particular the receiving space (28) is actively variably adjustable.

5. The apparatus (1; 101) according to one of the claims 1 to 4, **characterized in that** the effect of an excitation of the first contact element (5) can be detected at the first contact element (5) or at the second contact element (6) in order to determine the mechanical properties of the system (2).

6. The apparatus (1; 101) according to one of the claims 1 to 5, **characterized in that** the first contact element (5) and the second contact element (6; 60) are arranged spaced apart from one another, in particular by their contact and/or adhering faces (14, 24), by a distance (27) of less than 25 µm or 20 µm, preferably 16 µm, and/or the first contact element (5) and the second contact element (6; 60) are arranged spaced apart from one another, in particular by their contact and/or adhering faces (14, 24), by a distance of more than 10 µm, preferably more than 15 µm, wherein in particular a preset distance (27) between the first contact element (5) and the second contact element (6; 60) is actively adjustable.

7. The apparatus (1; 101) according to one of the claims 1 to 6, **characterized in that** two contact elements (5, 6) interacting with one another through a system (2), that is a contact element pair (30), are functionalized on different sides (13, 23) for contacting and adhering to the system (2), wherein these different sides (13, 23) are arranged directly opposite one another.

8. The apparatus (1; 101) according to one of the claims 1 to 7, **characterized in that** the excitation device (10A) comprises a photothermal excitation device (10A) and/or the excitation device (10A) comprise a device (10A) for generating a frequency sweep (62) in one or more frequency ranges.

9. Method for determining mechanical properties, namely rheological, viscoelastic properties, of a viscoelastic system (2), in which method the system (2) is arranged between two contact elements (5, 6; 60), and in which at least one contact element (5) of the two contact elements (5, 6; 60) is photothermally excited to oscillate, and oscillations of the excited contact element (5) and, insofar, also the rheological, viscoelastic properties are detected, while the two contact elements (5, 6; 60) are operatively connected to one another by the system (2), wherein the oscillatable contact element (5) or the system (2) is excited to oscillate with different frequencies and/or with one or more frequency sweeps (62).

10. Method according to claim 9, **characterized in that** a frequency range is continuously passed through in frequency sweeps (62).

11. The method according to claim 9 or 10, **characterized in that** the oscillatable contact element (5) or the system (2) is excited to oscillate with different frequencies and/or with one or more frequency sweeps (62), wherein in particular a frequency range is continuously passed through in frequency sweeps (62).

12. The method according to one of the claims 9 to 11, **characterized in that** different frequencies are applied concurrently.

13. The method according to one of the claims 9 to 12, **characterized in that** mechanical or rheological properties of the system are determined frequency-resolved or frequency-dependent.

14. The method according to one of the claims 9 to 13, **characterized in that** the system (2) is initially brought into operative contact with the first contact element (5) to determine the mass of the system (2) and only subsequently is the system (2) additionally brought into operative contact with the second contact element (6; 60) to additionally determine mechanical or rheological properties of the system (2).

## Revendications

1. Dispositif (1 ; 101) permettant la détermination de propriétés mécaniques, à savoir des propriétés rhéologiques, viscoélastiques, d'un système (2) viscoélastique, comportant un élément formant contact (5) pouvant osciller et comportant un autre élément formant contact (5 ; 60), dans lequel les deux éléments formant contacts (5, 6 ; 60) sont disposés l'un par rapport à l'autre de telle sorte qu'ils peuvent être reliés fonctionnellement entre eux au moyen du système (2), comportant un appareil (10A) pour l'excitation photothermique de l'élément formant contact (5) pouvant osciller, et comportant un appareil (20A) pour la détection d'oscillations et, par conséquent, des propriétés rhéologiques, viscoélastiques sur l'élément formant contact (5) pouvant osciller excité, dans lequel tant l'appareil (10A) pour l'excitation que l'appareil (20A) pour la détection interagissent avec l'élément formant contact (5) pouvant osciller, dans lequel l'élément formant contact (5) pouvant osciller ou le système (2) peut être excité avec différentes fréquences et/ou avec un ou plusieurs passages de fréquence (62) pour l'oscillation.

2. Dispositif (1 ; 101) selon la revendication 1, ***caractérisé en ce que*** l'appareil (10A) pour l'excitation photothermique est configuré de telle sorte qu'un élément formant contact (6) pouvant osciller peut être excité simultanément avec différentes fréquences.

3. Dispositif (1 ; 101) selon la revendication 1 ou 2, ***caractérisé en ce que*** le premier élément formant contact (5) et/ou le second élément formant contact (6 ; 60) comprennent respectivement un porte-à-faux (5A, 6A), en particulier un microporte-à-faux.

4. Dispositif (1 ; 101) selon l'une des revendications 1 à 3,
***caractérisé en ce qu*'**un espace de réception (28) pour un système (2) commun est disposé entre le premier élément formant contact (5) et le second élément formant contact (6 ; 60), dans lequel en particulier l'espace de réception (28) peut être modifié de manière variable et active.

5. Dispositif (1 ; 101) selon l'une des revendications 1 à 4,
***caractérisé en* ce *que*** l'effet d'une excitation du premier élément formant contact (5) peut être détecté sur le premier élément formant contact (5) ou sur le second élément formant contact (6) afin de déterminer les propriétés mécaniques du système (2).

6. Dispositif (1 ; 101) selon l'une des revendications 1 à 5,
***caractérisé en* ce *que*** le premier élément formant contact (5) et le second élément formant contact (6 ; 60), en particulier avec leurs surfaces de contact et/ou d'adhérence (14, 24), sont séparés l'un de l'autre par une distance (27) de moins de 25 µm ou 20 µm, de préférence de 16 µm, et/ou le premier élément formant contact (5) et le second élément formant contact (6 ; 60), en particulier avec leurs surfaces de contact et/ou d'adhérence (14, 24), sont séparés l'un de l'autre par une distance (27) de plus de 10 µm, de préférence de plus de 15 µm, dans lequel en particulier une distance (27) préréglée entre le premier élément formant contact (5) et le second élément formant contact (6 ; 60) peut être modifiée activement.

7. Dispositif (1 ; 101) selon l'une des revendications 1 à 6,
***caractérisé en ce que*** deux éléments formant contacts (5, 6) interagissant l'un avec l'autre par un système (2), c'est-à-dire une paire d'éléments formant contacts (30), sont fonctionnalisés sur des côtés différents (13, 23) pour le contact ou l'adhérence au système (2), dans lequel lesdits côtés différents (13, 23) sont disposés directement l'un en face de l'autre.

8. Dispositif (1 ; 101) selon l'une des revendications 1 à 7,
***caractérisé en ce que*** l'appareil (10A) pour l'excitation comprend un appareil d'excitation (10A) photothermique et/ou l'appareil (10A) pour l'excitation comprend un appareil (10A) pour la génération d'un passage de fréquence (62) dans un ou plusieurs domaines fréquentiels.

9. Procédé permettant la détermination de propriétés mécaniques, à savoir des propriétés rhéologiques, viscoélastiques, d'un système (2) viscoélastique, dans lequel le système (2) est disposé entre deux éléments formant contacts (5, 6 ; 60), et dans lequel au moins un élément formant contact (5) des deux éléments formant contacts (5, 6 ; 60) est excité de manière photothermique pour l'oscillation, et d'oscillations de l'élément formant contact (5) excité, et, par conséquent, des propriétés rhéologiques, viscoélastiques y sont également détectées, tandis que les deux éléments formant contacts (5, 6 ; 60) sont reliés fonctionnellement entre eux au moyen du système (2), dans lequel l'élément formant contact (5) pouvant osciller ou le système (2) est excité avec différentes fréquences et/ou avec un ou plusieurs passages de fréquence (62) pour l'oscillation.

10. Procédé selon la revendication 9, ***caractérisé en ce que,*** lors des passages de fréquence (62), un domaine fréquentiel est parcouru en continu.

11. Procédé selon la revendication 9 ou 10, ***caractérisé en ce que*** l'élément formant contact (5) pouvant osciller ou le système (2) est excité avec différentes fréquences et/ou avec un ou plusieurs passages de fréquence (62) pour l'oscillation, dans lequel en particulier, lors des passages de fréquence (62), un domaine fréquentiel est parcouru en continu.

12. Procédé selon l'une des revendications 9 à 11, ***caractérisé en ce que*** différentes fréquences sont appliquées simultanément.

13. Procédé selon l'une des revendications 9 à 12, ***caractérisé en ce que*** les propriétés mécaniques ou rhéologiques du système sont déterminées avec une résolution fréquentielle ou en fonction de la fréquence.

14. Procédé selon l'une des revendications 9 à 13, ***caractérisé en ce que*** le système (2) est d'abord mis en contact fonctionnel avec le premier élément formant contact (5) afin de déterminer la masse du système (2), et ce n'est qu'ensuite que le système (2) est en outre mis en contact fonctionnel avec le second élément formant contact (6 ; 60) afin de déterminer en outre des propriétés mécaniques ou des propriétés rhéologiques du système (2).
